# EUROPEAN PATENT APPLICATION

(11) **EP 4 733 188 A1**
(43) Date of publication of application: **29.04.2026**
(21) Application number: 25206405.0
(22) Date of filing: 02.10.2025
(51) Int. Cl.: B64C 9/02, B64C 9/16

(54) **DRIVE ASSEMBLY FOR DRIVING A MOVABLE FLOW DEVICE OF AN AIRCRAFT**

(30) Priority: 23.10.2024 DE 102024130899
(71) Applicant: AIRBUS Operations GmbH, 21129 Hamburg (DE)
(72) Inventor: Haserodt, Jan, 21129 Hamburg (DE)
(74) Representative: Airbus Germany

(57) **Abstract**

The invention relates to a drive assembly (2) for driving a movable flow device (4) of an aircraft. The drive assembly comprises a single actuator (10) comprising a longitudinal transmission element (48), a first support element (12) and a second support element (18). The longitudinal transmission element of the single actuator (10) is configured to be oriented transversely to an extending direction of the movable flow device (4), is configured to be mounted to a fixed support structure (6) of the aircraft, and is configured to act on the first and second support elements (12, 18) such that the movable flow device (4) is movable between extended or retracted positions relative to the fixed support structure (6). The invention also relates to a drive system, a high lift system, an aircraft wing, an aircraft and a method of actuating a movable flow device.

## Description

### FIELD OF THE INVENTION

The present invention generally relates to movable flow device systems. In particular, the invention relates to a drive assembly for driving a movable flow device of an aircraft, a drive system comprising a plurality of drive assemblies, a high lift system, an aircraft wing, an aircraft and a method of actuating a movable flow device.

### BACKGROUND OF THE INVENTION

Movable flow device systems are typically used in an aircraft to be able to switch between a takeoff or landing configuration and a cruise configuration of an airfoil. A so-called flow device may be a fixed component, or a movable mechanism which is deployed when required. Examples of a flow device are movable high-lift devices that can include wing flaps or slats. Flaps (usually at the trailing edge of an aircraft wing) and slats (usually at the leading edge of an aircraft wing) may increase the lift that the wing of an aircraft can produce at a lower speed when extended. Thus, in order to keep the takeoff and landing speeds as low as possible, highly efficient flaps and slats can be set to different positions: when extended, they alter the airflow so the wing can produce more lift at lower speed; for high-speed flight, they are retracted to reduce drag.

Flap or slat actuation systems are mostly operated centrally, wherein mechanical transmission shafts are routed along the wing and drive the slats or flaps by a central power drive unit. This mechanical connection synchronizes the flaps between left-hand and right-hand wing and between inboard and outboard flap/slat on both wings.

Another option are differential settings on the leading edge and/or the trailing edge (e.g. due to differential flap setting function or due to a need to drive the devices sequentially as for example for Kruger devices to prevent a failure mode with all devices jamming in one position). However, it has been shown that this may result in a complex components' setup.

### SUMMARY OF THE INVENTION

It may be seen as an object of the invention to provide further improved drive systems for a flow device of an aircraft. The object of the present invention is solved by the subject-matter of the independent claims; further embodiments are incorporated in the dependent claims.

Provided is a drive assembly, a drive system, a high lift system, an aircraft wing, an aircraft and a method according to the features of the independent claims.

According to an aspect of the invention, a drive assembly for driving a movable flow device of an aircraft is provided. The drive assembly comprises a single actuator comprising a longitudinal transmission element, the longitudinal transmission element having a first end and a second end. The longitudinal transmission element of the single actuator is configured to be oriented transversely to an extending direction of the movable flow device and the single actuator is further configured to be mounted to a fixed support structure of an aircraft. The drive assembly further comprises a first support element having a first end and a second end, which is mountable with the first end to a first section of the fixed support structure of the aircraft and with the second end to a first section of a movable flow device. The drive assembly further comprises a second support element having a first end and a second end, which is mountable with the first end to a second section of the fixed support structure of the aircraft and with the second end to a second section of the movable flow device. The single actuator is configured to act on the first and second support elements such that the movable flow device is movable between extended or retracted positions relative to the fixed support structure.

The inventive drive assembly may be seen as an approach to provide an improved architecture of a decentralized single slat or flap driving system. For example, in order to guarantee symmetry and uniform movement of all flap or slat surfaces, the individually driven flaps or slats will be controlled and monitored centrally.

The architecture has been simplified in that the drive assembly comprises only one single actuator per movable flow device.

Fewer parts result in a better physical integration feasibility, in a weight saving on system level, in an installation time saving, and in lower drag of the system reducing the necessary power to operate the high lift system. It will also likely reduce costs.

Reducing the needed actuators from for example two to one per device improves the integration of the actuation system within the strongly restricted space that is available in the thin wing. The improved architecture could also be used in a wingtip leading edge high lift system.

As a further advantage, using only one actuator eliminates a specific failure case which could lead to an active skewing of the device. A situation in a two actuator set-up per device where an actuator has experienced a disconnect or failure e.g. on the input side, but still supports the device while the opposite actuator on the device continues to move. In the inventive drive assembly this case is eliminated by architecture because a disconnect to either side of the single actuator will be detected and only leads to a passive skewing of the device by airloads.

A "movable flow device" can also be referred to as a movable flow body and may be referred to as movable high-lift device. A movable flow device comprises, for example, flaps and slats (such as for example Kruger flaps) of an aircraft wing. Flaps and slats may be configured to be moved between extended or retracted positions at a leading edge or at a trailing edge of the wing. The movement direction, also referred to as the deployment direction or extending direction, may be perpendicular to the transverse axis, i.e. parallel to the longitudinal axis of the aircraft in case the wings are arranged at right angles. However, as aircraft wings are usually mounted at a slight angle to the rear, the extending direction may be defined as being parallel to the chord of the wing. The axis of the extending direction of the movable flow device may e.g. form an angle of 0 to 45 degrees with the longitudinal axis of the aircraft.

The "single actuator" is configured to be oriented, with its longitudinal transmission element, transversely to an extending direction of the movable flow device. For example, the longitudinal transmission element of the single actuator is oriented in a spanwise direction along the spar of the aircraft wing. In other words, the longitudinal transmission element of the single actuator may be arranged substantially parallel to the long side of the movable flow device. In addition, the single actuator is configured to be mounted to a fixed support structure of the aircraft.

The single actuator may, for example, be a linear actuator providing for a linear actuation of the longitudinal transmission element. Linear actuators can, for example, operate by conversion of rotary motion into linear motion.

A "longitudinal transmission element" typically refers to a component or mechanism that facilitates the transmission of force or motion along a longitudinal axis. This can include various devices such as drive shafts or push rods.

For example, a longitudinal transmission element can transmit force or motion along a straight path. The term "longitudinal" indicates that the transmission or motion occurs along the length of the element, rather than in a lateral or rotational manner.

The single actuator is configured to drive or act on the two support elements and can thereby move the movable flow device.

The "first and the second support elements" each have a first end and a second end and are mountable with their first ends to different sections, i.e. a first and a second section of a fixed support structure of the aircraft and with their second ends to different sections, i.e. a first and a second section, of the movable flow device. The support elements may also be referred to as support stations or support levers. The support elements may be rigid and are, for example, fixed rods or bars that are mountable at the specified points and connect the movable flow device with the support structure of the aircraft. Optionally, the support elements can contain a gear segment that may interact with a straight rack on the longitudinal transmission element.

The longitudinal transmission element of the single actuator may be connected with its right or left end, respectively, (i.e. with its first or second end) to the support elements. Consequently, there may be a mechanical connection between the driven support elements which ensures a synchronous movement, i.e. a synchronous deployment of the movable flow device. However, in an arrangement with intermediate links, such as connection rods, there may be a kinematic difference between the left and right deployment of the support elements which could be compensated by the attachment principle to the device and/ or the flexibility of the device.

According to an embodiment, the drive assembly further comprises an electric motor which activates the single actuator, and two Motor Control Electronics (MCEs) which are coupled with the electric motor. The MCEs are connected to one or more Flight Control Computer(s) (FCC(s)).

The electric motor can be a redundant electric motor. For example, a redundant electric brushless DC motor can be used, which is connected to two local Motor Control Units and -for example but not necessarily- supplied by HVDC from two electric systems of the aircraft. The redundant sides of the motor act on one single motor output shaft. This set-up enables the function of the devices if one electric system, one MCE, or one winding side of the electric motor fails.

The drive assembly may be regarded as a single slat drive architecture as subsystem per slat device in a leading edge high-lift system. But it could also be used for a single flap drive system in a trailing edge high lift system.

This means that each high lift device can be controlled individually by the central Flight Control Computer(s) commanding the local drive units. The synchronization between the devices per wing or between the left hand (LH) and right hand (RH) wing is done electronically by a suitable control and monitoring via the FCC(s). In the case of a high lift system with multiple devices, such decentralized architecture enables non-faulty pairs to remain fully operational after certain failure cases of other pairs.

In an embodiment, the drive assembly further comprises at least one position sensor and/or at least one load sensor.

For control and monitoring each drive assembly contains at least one position sensor, for example at least one electrically redundant position sensor, optionally two electrically redundant position sensors, in the actuator measuring the push/pull-rod position, i.e. the position of the longitudinal transmission element; furthermore, the drive assembly may contain at least one, for example two, electrically redundant load sensor(s), arranged at two opposite sides of the actuator, e.g. towards the support elements.

According to an embodiment, the single actuator is configured to drive the longitudinal transmission element into a translational or a rotational movement (also referred to as a translating movement or a rotating movement, respectively). In an example, a redundant electric motor may be associated with the actuator, e.g. a redundant electric motor may be coupled with the actuator. In the actuating system, energy, e.g. electric energy provided by a redundant electric motor, may be converted into motion. The actuator may convert - via its longitudinal transmission element - a movement into another movement, for example a rotation around an axis may be converted into a rotation around another axis or into a translation. The actuator may also convert a translational movement into a rotational movement or into another translational movement. Translational movement refers to motion along a straight path, like the movement of a piston in a cylinder, while rotational movement involves spinning around an axis, like the rotation of a motor shaft. The actuator can be designed to perform either type of movement depending on the application it is intended for.

The transmission element may be linked to the two support elements and consequently, a motion can be transferred to the support elements and to the movable flow device.

In another variant, if the longitudinal transmission element rotates it could drive for example two pinions of a typical rack and pinion arrangement at the slat or flap support (e.g. the support elements); as a further example, it could also drive a support element bearing assembly in a linkage.

According to another embodiment, the drive assembly further comprises at least one power-off brake (PoB) for breaking either a translating movement or a rotating movement of the longitudinal transmission element of the single actuator. In a preferred embodiment, the drive assembly comprises two PoBs for safety reasons.

Two power-off brakes may be used in the architecture for the braking function of the actuator outputs due to redundancy needs for safety. For example, the power-off brakes may be located at each side, i.e. at two opposite sides, of the through drive actuator outputs. In a beneficial arrangement, each PoB comprises two solenoids holding the brake open and connected to the two MCEs.

In an embodiment, the drive assembly further comprises a rack and a pinion element, the single actuator being configured to act on the support elements via the rack and/or the pinion element, or a gear segment. The rack may be a translating rack and the pinion may be a rotating pinion element. For example, the rack comprises a number of teeth, and the rotating pinion element is a pinion segment. In another example, the rotating pinion element is a pinion.

In an embodiment, the pinion element is arranged on the longitudinal transmission element and the rack is arranged on the support elements.

In another embodiment, the rack is arranged on the longitudinal transmission element and the pinion is arranged on the support elements.

Hence, there may be a translating rack from the actuator side and a rotating pinion on the kinematics side. It is possible that a rotational output movement of the actuator drives a pinion which may drive a rack of a slat track. In an example, the single actuator is used to control the support elements through a combination of translational and rotational motion.

For example, the rack may engage with a rotating pinion element or a pinion segment. The pinion may be mounted on a shaft and rotates when the rack moves. This rotational motion may be perpendicular to the direction of movement of the rack. The rotational motion of the pinion element can then be used to actuate or control the support elements. Depending on the design, the support elements might pivot, lift, or perform other actions in response to the rotational motion imparted by the pinion element.

This combination of translational motion via the rack and rotational motion via the pinion element allows the single actuator to control the support elements effectively.

In an embodiment, the single actuator is configured to act on the first and second support elements such that the support elements perform a swivel movement.

For example, if the transmission element is moved by the actuator in a linear direction parallel to the fixed support structure such that the first support element is pulled towards the actuator whereas the second support element is pushed away from the actuator, the two support elements can perform a swivel movement.

The movement of the actuator can enable the support elements to pivot or swivel around a fixed point (such as the connection point with the fixed support structure). Hence, the actuator may induce the desired swivel movement in the support elements. Such swivel movement of the support elements could serve various purposes, such as positioning components like a movable flow device. In a preferred embodiment, a movable flow device is moved between retracted and extended position(s) with respect to a fixed support structure.

In a further embodiment the drive assembly further comprises a first connection rod having a first end and a second end, and a second connection rod having a first end and a second end. The first end of the first connection rod is coupled to the first support element, and the second end of the first connection rod is coupled to the first end of the longitudinal transmission element of the single actuator. The first end of the second connection rod is coupled to the second end of the longitudinal transmission element of the single actuator, and the second end of the second connection rod is coupled to the second support element, such that the single actuator acts on the support elements via the connection rods.

The connection rods are stiff connection rods and are connected, between the support elements, to the longitudinal transmission element of the single actuator. With their other ends the connection rods are mounted to the support elements. As the actuator moves the connection rods, the support elements are moved which again move the connected flow device.

In an example, the connection rods are connected to the support elements via linkage. In this arrangement there may be a kinematic difference between the left and right deployment of the support elements which could be compensated by the attachment principle to the device and/ or the flexibility of the device. In another example, the connection rods are configured as a rack and connect with the support elements via a pinion segment.

Thus, there may be a mechanical connection via push/ pull rods between the two driven support elements which ensures a synchronous deployment. In other words, this architecture can keep a mechanical link between the two support elements to synchronize the movement at two stations of the movable flow device.

Instead of directly translating the motion, the actuator may generate a rotational movement. The rotational output from the actuator can be transferred to a pinion gear which rotates when driven by the actuator. The rotation of the pinion gear may engage with a rack which is a straight or curved gear with teeth along its length. As the pinion gear turns, it moves the rack either forward or backward along its path.

The rack may be part of a track system connected to the support elements. As the rack moves due to the rotation of the pinion, it imparts motion to the support elements.

Thus, the support elements likely control or adjust the position of the movable flow device.

According to an embodiment, a drive assembly is provided, wherein a load path from the electric motor to the single actuator is a single load path or a dual load path.

The single actuator can use a single load path design except for a redundant electric motor and its connection to e.g. a nut acting on a ball screw or a pinion acting on a rack. This motor to nut or motor to pinion load path can be doubled (and potentially there could be a reduction gearing in between). Such a set-up within the actuator would have the advantage that in a failure case of slipping of one load path (e.g. nut to one side of motor) the other load path would still hold the actuator in position.

Another variant could also be a single load path connection to the motor which would then necessitate a quick reaction time of the system via the FCC to close the brakes in such a failure case. The above described two load paths to the motor are advantageous.

According to an aspect, a drive system is provided comprising a plurality of drive assemblies as described herein, wherein the drive assemblies are independent from each other, such that individual movable flow devices are movable independently from each other.

The drive system may be referred to as a decentralized drive system, or as single flap or single slat drive system. This means that each high lift device or drive assembly can be controlled individually by the central Flight Control Computer(s) (FCCs) commanding the local drive units. The synchronization between the devices per wing or between the LH and RH wing is done electronically by a suitable control and monitoring via the FCCs.

According to an aspect, a high lift system comprising at least one drive system as described herein and/or at least one drive assembly as described herein, and at least one movable flow device coupled with the at least one drive system and/or the at least one drive assembly, is provided. As an example, a distributed leading edge high lift system architecture comprising at least one drive system comprising at least one drive assembly with one single actuator per device is provided.

In the case of a high lift system with multiple devices, a decentralized architecture as described herein for example enables non-faulty pairs to remain fully operational after certain failure cases.

According to another aspect, an aircraft wing is provided comprising at least one high lift system as described herein, wherein the high lift system is arranged at a leading edge region and/or at a trailing edge region of the aircraft wing.

According to another aspect, an aircraft comprising at least one aircraft wing as described herein and/or at least one high lift system as described herein and/or at least one drive system as described herein and/or at least one drive assembly as described herein is provided.

According to another aspect, a method of actuating a movable flow device of an aircraft using the drive assembly as herein described is provided. In a step of the method, a single actuator comprising a longitudinal transmission element is provided, wherein the longitudinal transmission element has a first end and a second end. In another step, a first support element is provided which has a first end and a second end, and which is mountable with the first end to a first section of a fixed support structure and with the second end to a first section of the movable flow device. In yet another step, a second support element is provided which has a first end and a second end, and which is mountable with the first end to a second section of the fixed support structure and with the second end to a second section of the movable flow device.

The longitudinal transmission element of the single actuator is configured to be oriented transversely to an extending direction of the movable flow device. The single actuator is configured to be mountable to the fixed support structure of the aircraft and acts on the first and second support elements such that the movable flow device is movable between an extended or retracted position relative to the fixed support structure. The method steps may be performed in the indicated order.

### BRIEF DESCRIPTION OF THE DRAWINGS

The present invention will hereinafter be described in conjunction with the following drawing figures, wherein like numerals denote like elements, and wherein:
Fig. 1 shows a schematic illustration of a drive assembly for driving a movable flow device of an aircraft.
Fig. 2 shows a schematic illustration of the drive assembly shown in Fig. 1 in a second position.
Fig. 3 shows a schematic illustration of a variant of the drive assembly.
Fig. 4 shows a schematic illustration of load paths from motor to actuator.
Fig. 5 shows an aircraft comprising a high lift system.
Fig. 6 shows a flow diagram of a method of actuating a movable flow device.

### DETAILED DESCRIPTION OF EMBODIMENTS

The representations and illustrations in the drawings are schematic and not to scale. A better understanding of the assembly, the system and the method described above may be obtained through a review of the illustrations accompanying this application together with a review of the detailed description that follows.

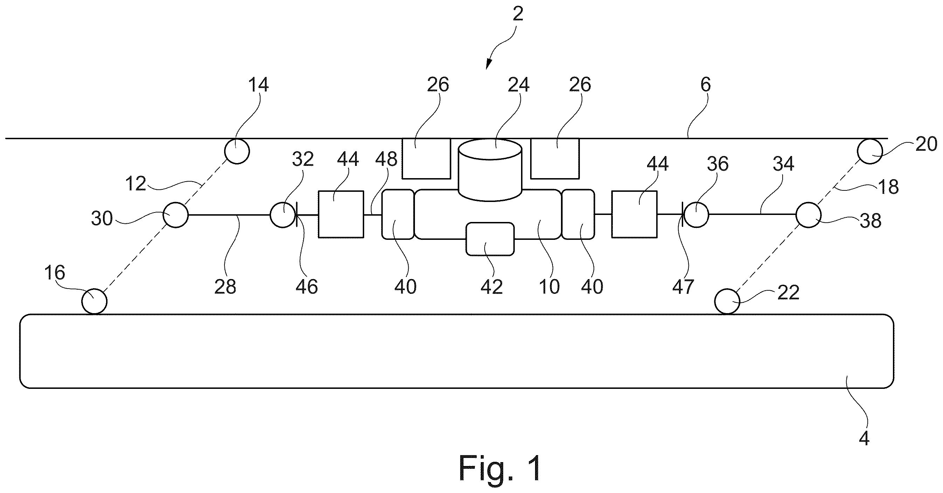

Fig. 1 shows a drive assembly 2 for driving a movable flow device 4 of an aircraft 50. The drive assembly 2 comprises a single linear actuator 10 which is mounted to a fixed support structure 6 of an aircraft wing 52 and comprises a longitudinal transmission element 48. The drive assembly further comprises two rigid support elements (indicated by dashed lines), i.e. a first support element 12 and a second support element 18. The first support element 12 is mounted with its first end 14 to a first section of a fixed support structure 6 of the wing 52 of an aircraft 50, and with its second end 16 to a first section of a movable flow device 4. Likewise, the second support element 18 is mounted with its first end 20 to a second section of the fixed support structure 6, and with its second end 22 to a second section of the movable flow device 4.

Two stiff connection rods 28, 34 are provided between the support elements 12, 18. The connection rods are connected via linkage both to the support elements 12, 18 and to the ends 46, 47 of the longitudinal transmission element 48 of the single actuator 10. In particular, a first end 30 of the first connection rod 28 is coupled to the first support element 12, and a second end 32 of the first connection rod 28 is coupled to the first end 46 of the longitudinal transmission element 48. On the other side of the linear actuator 10, a first end 36 of the second connection rod 34 is coupled to the second end 47 of the longitudinal transmission element 48 of the actuator 10, and a second end 38 of the second connection rod 34 is coupled to the second support element 18.

Two motor control electronics (MCEs) 26 are shown, which are coupled to a redundant electric motor 24. The redundant electric motor 24 activates the single linear actuator 10. The actuator 10 transmits a motion along the longitudinal axis and consequently, can move the connection rods 28, 34 via its longitudinal transmission element 48. The connection rods 28, 34 move the support elements 12, 18, and the support elements 12, 18 can thus move the connected movable flow device 4.

In addition, two load sensors 44 are shown. The two load sensors 44 are arranged at two opposite sides of the actuator 10. The load sensors 44 can measure the force applied to the longitudinal transmission element 48. Two power-off brakes (PoBs) 40 are provided which can break a translating movement of the single actuator 10. And finally, a position sensor 42 is provided in the actuator 10, which measures the push/pull-rod position, i.e. the position of the longitudinal transmission element 48.

The power-off brakes (PoBs) 40 are used for braking the function of the actuator 10 due to redundancy needs for safety. The power-off brakes 40 are located at each side of the through drive actuator 10 outputs. Each PoB 40 comprises two solenoids (not shown) holding the brake open and connected to the two MCEs 26. The MCEs 26 are connected to a flight control computer (not shown).

In this example, the two support elements 12, 18 may perform a swivel movement deploying the movable flow device 4 into an extended position.

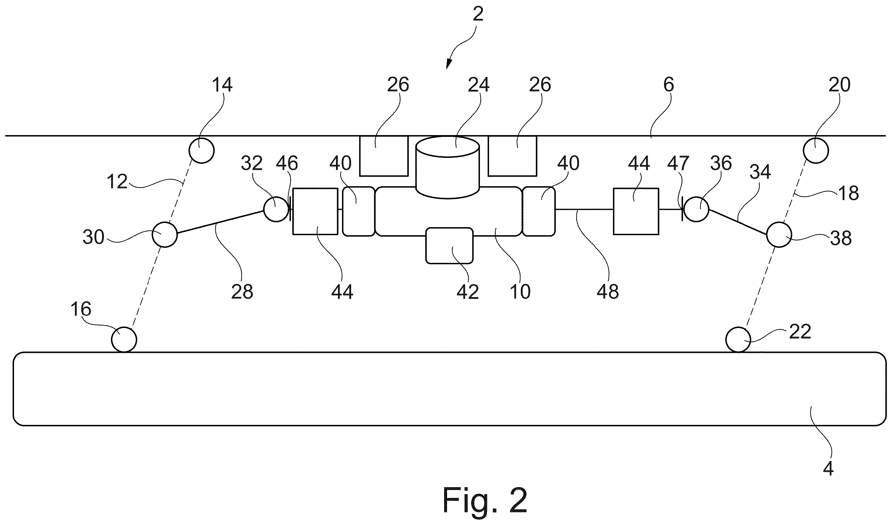

For a better understanding, Fig. 2 shows a schematic illustration of the drive assembly shown in Fig. 1 in a second, extended position.

The longitudinal transmission element 48 has been moved to the right such that the connection rods 28, 34 are pulled or pushed, respectively, and now appear slightly bent at the joint of their first or second end 36, 32, with which they are coupled to the transmission element 48. The two support elements 12, 18 have swiveled downwards and the flow device 4 is now in a more extended position with respect to the fixed support structure 6.

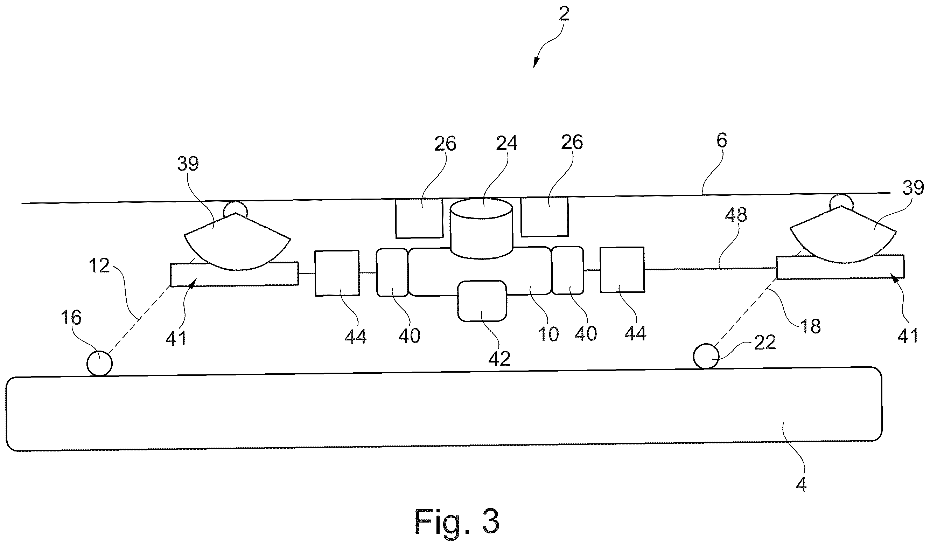

Fig. 3 shows a schematic illustration of a variant of the drive assembly 2, wherein the single actuator 10 acts on the support elements 12, 18 via translating rack 41 and rotating pinion 39. In particular, Fig. 3 shows translating racks 41 from the actuator side and a rotating pinion segments 39 on the kinematics side. In this case, the actuator 10 drives racks 41 which are connected at both sides to the longitudinal transmission element 48 of the actuator. The racks 41 engage with rotating pinion segments 39. The pinion segments 39 are mounted on the support elements 12, 18 and rotate when the racks 41 move. The rotational motion of the pinion segments 39 is then used to actuate or control the support elements 12, 18. As explained with respect to Fig. 1, the support elements 12, 18 perform a swivel movement in response to the rotational motion imparted by the pinion segments 39.

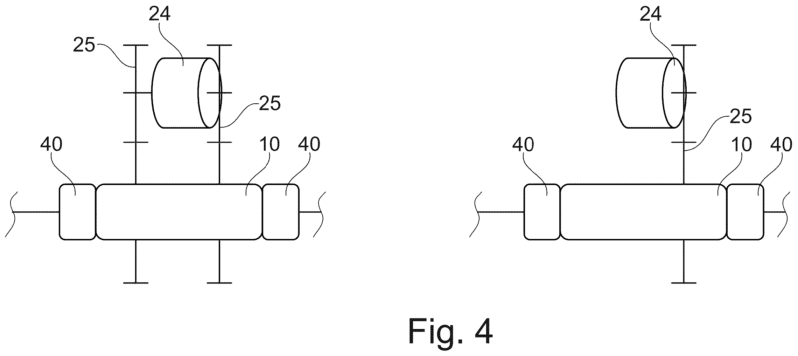

Fig. 4 shows a load path 25 from the electric motor 24 to the single actuator 10 either as a single load path (shown on the right) or as a dual load path (shown on the left). In addition, two power-off brakes 40 are provided on both sides of the actuator.

The single actuator 10 mostly uses a single load path 25 design as in the example that is shown on the right in Fig. 4. In this example, the single load path 25 connection to the motor 24 however necessitates a quick reaction time of the system via the FCC (not shown) to close the brakes 40 in such a failure case.

In the example on the left side of Fig. 4, the load path 25 is doubled and a reduction gearing is arranged in between (not shown). Such a set-up within the actuator 10 has the advantage that in case of slipping of one load path 25 (e.g. nut to one side of motor) the other load path 25 would still hold the actuator 10 in position.

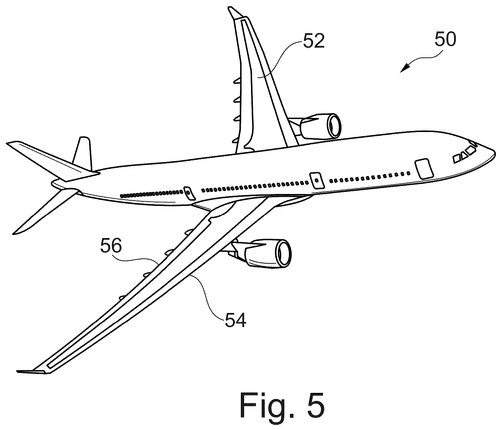

Fig. 5 shows an aircraft 50 comprising a high lift system comprising a drive assembly 2 as explained above with respect to Figs. 1 to 3. The aircraft 50 comprises an aircraft wing 52 with a leading edge 54 and a trailing edge 56, wherein the the high lift system is arranged at the leading edge 54 of the aircraft wing 52.

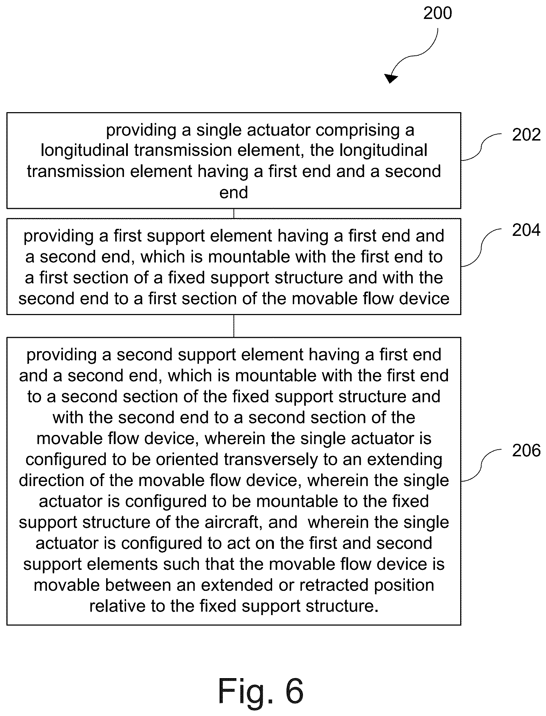

Fig. 6 shows a flow diagram of a method 200 of actuating a movable flow device of an aircraft, for example using the drive assembly 2 as explained above with respect to Figs. 1 to 3. A step 202 comprises providing a single actuator comprising a longitudinal transmission element, the longitudinal transmission element having a first end and a second end. Another step 204 of the method comprises providing a first support element having a first end and a second end, which is mountable with the first end to a first section of a fixed support structure and with the second end to a first section of the movable flow device. A further step 206 comprises providing a second support element having a first end and a second end, which is mountable with the first end to a second section of the fixed support structure and with the second end to a second section of the movable flow device. The single actuator is configured to be oriented transversely to an extending direction of the movable flow device, and is configured to be mountable to the fixed support structure of the aircraft. The single actuator is further configured to act on the first and second support elements such that the movable flow device is movable between an extended or retracted position relative to the fixed support structure.

### REFERENCE SIGNS

- 2: drive assembly
- 4: movable flow device
- 6: fixed support structure
- 10: single actuator
- 12: first support element
- 14: first end of first support element
- 16: second end of first support element
- 18: second support element
- 20: first end of second support element
- 22: second end of second support element
- 24: electric motor
- 25: load path
- 26: motor control electronics (MCE)
- 28: first connection rod
- 30: first end of first connection rod
- 32: second end of first connection rod
- 34: second connection rod
- 36: first end of second connection rod
- 38: second end of second connection rod
- 39: pinion element
- 40: Power-off brake (PoB)
- 41: rack
- 42: position sensor
- 44: load sensor
- 46: first end of the longitudinal transmission element
- 47: second end of the longitudinal transmission element
- 48: longitudinal transmission element
- 50: aircraft
- 52: aircraft wing
- 54: leading edge
- 56: trailing edge

## Claims

1. A drive assembly (2) for driving a movable flow device (4) of an aircraft (50), comprising:
- a single actuator (10) comprising a longitudinal transmission element (48), the longitudinal transmission element (48) having a first end (46) and a second end (47),
- a first support element (12) having a first end (14) and a second end (16), which is mountable with the first end (14) to a first section of a fixed support structure (6) of the aircraft and with the second end (16) to a first section of the movable flow device (4), and
- a second support element (18) having a first end (20) and a second end (22), which is mountable with the first end (20) to a second section of the fixed support structure (6) of the aircraft and with the second end (22) to a second section of the movable flow device (4),
wherein the longitudinal transmission element (48) of the single actuator (10) is configured to be oriented transversely to an extending direction of the movable flow device (4),
wherein the single actuator (10) is configured to be mounted to the fixed support structure (6) of the aircraft (50), and
wherein the single actuator (10) is configured to act on the first and second support elements (12, 18) such that the movable flow device (4) is movable between extended or retracted positions relative to the fixed support structure (6).

2. Drive assembly (2) according to claim 1, further comprising:
- a redundant electric motor (24),
- two Motor Control Electronics (MCE) (26) coupled with the redundant electric motor (24) and connected to at least one Flight Control Computer (FCC),
wherein the single actuator (10) is activated by the redundant electric motor (24).

3. Drive assembly (2) according to claim 1 or 2, further comprising at least one position sensor (42) in the actuator and/or at least one load sensor (44) arranged at two opposite sides of the actuator.

4. Drive assembly (2) according to any one of the preceding claims, wherein the single actuator (10) is configured to drive the longitudinal transmission element (48) into a translational or a rotational movement.

5. Drive assembly (2) according to claim 4, further comprising two power-off brakes (40) for breaking either the translational movement or the rotational movement of the longitudinal transmission element (48) of the single actuator (10).

6. Drive assembly (2) according to any one of the preceding claims, further comprising a rack (41) and a pinion element (39), wherein the single actuator (10) is configured to act on the support elements (12, 18) via the rack (41) and the pinion element (39).

7. Drive assembly (2) according to claim 6, wherein the pinion element (39) is arranged on the longitudinal transmission element (48) and the rack (41) is arranged on the support elements (12, 18), or wherein the rack (41) is arranged on the longitudinal transmission element (48) and the pinion element (39) is arranged on the support elements (12, 18).

8. Drive assembly according to any one of the preceding claims, wherein the single actuator (10) is configured to act on the first and second support elements (12, 18) such that the support elements perform a swivel movement.

9. Drive assembly (2) according to any one of the preceding claims, further comprising:
- a first connection rod (28) having a first end (30) and a second end (32),
- a second connection rod (34) having a first end (36) and a second end (38),
wherein the first end (30) of the first connection rod (28) is coupled to the first support element (12),
wherein the second end (32) of the first connection rod (28) is coupled to the first end of the longitudinal transmission element (46) of the single actuator (10), wherein the first end (36) of the second connection rod (34) is coupled to the second end of the longitudinal transmission element (47) of the single actuator (10),
wherein the second end of the second connection rod (38) is coupled to the second support element (18),
such that the single actuator (10) acts on the support elements (12, 18) via the connection rods (28, 34).

10. Drive assembly (2) according to any one of the preceding claims wherein a load path (25) from the electric motor (24) to the single actuator (10) is a single load path or a dual load path.

11. A drive system comprising a plurality of drive assemblies (2) according to any of the preceding claims, wherein the drive assemblies (2) are independent from each other, such that individual movable flow devices (4) are movable independently from each other.

12. A high lift system comprising at least one drive system according to claim 11 and/or at least one drive assembly (2) according to any of the claims 1 to 10, and at least one movable flow device (4) coupled with the at least one drive system and/or the at least one drive assembly (2).

13. An aircraft wing (52) comprising at least one high lift system according to claim 12, wherein the high lift system is arranged at a leading edge region and/or at a trailing edge region of the aircraft wing (52).

14. An aircraft (50) comprising at least one aircraft wing (52) of claim 13 and/or at least one high lift system of claim 12 and/or at least one drive system of claim 11 and/or at least one drive assembly (2) of any of the claims 1 to 10.

15. A method (200) of actuating a movable flow device of an aircraft using the drive assembly according to any of claims 1 to 10, comprising the following steps:
- providing (202) a single actuator comprising a longitudinal transmission element, the longitudinal transmission element having a first end and a second end,
- providing (204) a first support element having a first end and a second end, which is mountable with the first end to a first section of a fixed support structure and with the second end to a first section of the movable flow device, and
- providing (206) a second support element having a first end and a second end, which is mountable with the first end to a second section of the fixed support structure and with the second end to a second section of the movable flow device,
wherein the single actuator is configured to be oriented transversely to an extending direction of the movable flow device,
wherein the single actuator is configured to be mountable to the fixed support structure of the aircraft, and
wherein the single actuator acts on the first and second support elements such that the movable flow device is movable between an extended or retracted position relative to the fixed support structure.
